# DEMANDE DE BREVET EUROPEEN

(11) **EP 1 163 855 A1**
(43) Date de publication de la demande: **19.12.2001**
(21) Numéro de dépôt: 01401575.4
(22) Date de dépôt: 15.06.2001
(51) Int. Cl.: A23L 1/325, A23L 1/01, A47J 37/04

(54) **Cuisson combinée en continu microondes vapeur**

(30) Priorité: 16.06.2000 FR 0007746
(71) Demandeur: Neptune S.A., 78220 Viroflay Cedex (FR)
(72) Inventeur: Vedrenne, Laurent, 17230 Marans (FR)
(74) Mandataire: Geismar, Thierry

(57) **Abrégé**

Procédé de fabrication en continu d'un produit alimentaire sous forme de pâte crue caractérisé en ce qu'il comprend en combinaison une étape de cuisson microondes et une étape de cuisson vapeur, la cuisson microondes permettant essentiellement la cuisson rapide à coeur du produit de manière à obtenir une structure de type gel suffisamment stable, et la cuisson vapeur complétant la cuisson microondes sans déssèchement ni éclatement du matériau cuit du produit.

## Description

L'invention concerne un procédé de fabrication de produit alimentaire combinant une cuisson microondes et une cuisson vapeur, une installation mettant en oeuvre ce procédé et un produit obtenu à l'aide du procédé.

L'invention a pour objet d'obtenir en continu un produit cuit ayant une texture stable par une cuisson rapide. Ce procédé s'applique notamment à la cuisson d'une préparation à base de poisson.

On connaît déjà des procédés en continu de cuisson vapeur d'une préparation alimentaire, par exemple à base de poisson. Un tel procédé nécessite un temps de cuisson long et/ou des longueurs de four élevées, par exemple de 10 à 20 mètres pour des produits défilant en continu dans le four à une vitesse de 3 à 7 m/min. Un tel problème se rencontre par exemple dans la cuisson d'une pâte de chair de poisson défilant en continu d'une épaisseur dépassant 1 à 2 centimètres que l'on souhaite travailler mécaniquement après cuisson, par exemple râpage découpe. Ceci oblige à utiliser une bande plus mince pour obtenir la cuisson souhaitée, ce qui réduit fortement les cadences de fabrication.

On connaît par ailleurs des procédés de cuisson microondes de manière à obtenir une cuisson beaucoup plus rapide. Mais avec de tels procédés il est très difficile d'obtenir une structure souhaitée stable du produit sans déssèchement ou déformation du produit. Par exemple lorsque l'on fait défiler en continu des portions moulées de pâte de poisson, la cuisson microondes dans un four de 4 à 5 mètres de long conduit à un produit cuit mais dont la forme est altérée fortement à la sortie du four et dont la surface est desséchée.

En effet, la cuisson microonde a une excellente efficacité sur la montée en température du matériau à cuire de la température d'entrée dans le four, de l'ordre de 0 à 10°C, jusqu'à une zone de température seuil, de l'ordre de 65 à 75°C. Grâce à cette cuisson rapide, à une puissance microondes typiquement de 2 à 4 KW par module sur la durée de cuisson microondes rapide, la gélification du matériau à coeur débute très tôt, ce qui permet d'éviter des déformations de la forme du matériau introduit dans le four, en particulier s'il s'agit de formes moulées introduites crues dont la structure pâteuse n'est pas stable longtemps, la pâte s'écoulant provoquant un affaissement de la forme avant stabilisation par la cuisson.

Par contre, au delà de cette zone seuil, si l'on continue de cuire par microondes à forte puissance dans les plages de température du produit à coeur élevées, de l'ordre de 75 à 90°C, on observe un phénomène d'emballement dans le produit qui se traduit par une vaporisation excessive d'eau. Ceci entraîne un gonflement non souhaité, voire un éclatement du matériau, la forme du matériau n'étant plus préservée, et le matériau se desséchant en surface.

L'invention vise à pallier ces inconvénients en proposant un procédé permettant de figer très rapidement la forme du produit et de limiter la déformation des produits à la cuisson.

Le procédé a pour but de permettre une cuisson rapide simultanément à coeur et en surface du produit.

L'invention vise également à réduire fortement l'encombrement du matériel et la longueur du four requise pour un procédé en continu.

L'invention vise également une grande possibilité d'applications, allant de petites formes moulées de quelques centimètres à des bandes larges de produits destinées à un traitement mécanique après la cuisson.

De plus, l'invention s'applique à une grande diversité de formulation du produit cuit. Par exemple l'invention est destinée à la cuisson d'une pâte de poisson comme à une formulation comprenant un mélange d'une pâte de poisson et de fibres obtenues à partir de poisson.

A cet effet, l'invention a pour objet selon un premier aspect un procédé de fabrication en continu d'un produit alimentaire sous forme de pâte crue, comprenant en combinaison une étape de cuisson microondes et une étape de cuisson vapeur, la cuisson microondes permettant essentiellement la cuisson rapide à coeur du produit de manière à obtenir une structure de type gel suffisamment stable, la cuisson vapeur complétant la cuisson microondes sans déssèchement ni éclatement du matériau cuit.

L'étape de cuisson microondes est réalisée avant ou simultanément avec la cuisson vapeur.

Le procédé met en oeuvre un four microondes comprenant plusieurs modules consécutifs de cuisson et comprend :
- une première étape de cuisson microondes rapide dans au moins un module de cuisson microondes, à forte puissance microondes, typiquement de 2 à 4 KW par module, de manière à obtenir une montée en température du matériau jusqu'à 65 à 75°C en sortie du ou des modules de cuisson microondes rapide, la cuisson rapide évitant la déformation des formes ;
- une deuxième étape de cuisson vapeur modérée de manière à permettre la montée en température à coeur du produit jusqu' à une température de 75 à 90°C, suffisamment lentement pour éviter son éclatement à la cuisson et compléter la cuisson de surface sans dessèchement.

Le procédé met en oeuvre une installation de type four à microondes comprenant une entrée et une sortie, et comprend les étapes suivantes :
- introduction du matériau à cuire par l'entrée du four
- transfert du matériau de l'entrée vers la sortie du four, la cuisson microondes étant telle que les ondes sont réparties de façon homogène dans l'enceinte de cuisson ;
- évacuation du matériau cuit du four et refroidissement du matériau cuit.

Selon une réalisation, le procédé comprend une étape de cuisson microondes modérée, à puissance suffisamment réduite, typiquement de 1 à 3 KW par module, pour achever la cuisson de surface sans altération des formes.

Le procédé crée un courant de vapeur circulant dans les modules dans le même sens ou dans le sens opposé au sens de défilement des produits dans le four.

Selon une réalisation le temps de séjour du matériau cuit dans le four exposé à la cuisson combinée microondes-vapeur est de 30 à 120 secondes, la température de la vapeur dans le tunnel de cuisson étant de 75 à 130°C, la puissance totale émise en microondes étant de 3 à 12 KW répartie sur l'ensemble du four pour un débit de 50 à 140 Kg/heure.

Par ailleurs le procédé peut comprendre une étape de moulage avant cuisson, le matériau se présentant sous forme de formes moulées typiquement de 1 à 3 cm de largeur et de 1 à 5 cm d'épaisseur, et un poids de 3 à 300 g, typiquement 3 à 20 g.

Selon une réalisation le matériau à cuire se présente sous la forme d'une bande d'au moins 2 cm de largeur et 1 cm d'épaisseur, typiquement 30 cm à 1m de largeur et 1 à 5 cm d'épaisseur.

Le procédé peut également comprendre une étape de coloration avant cuisson selon un procédé de pulvérisation, de dépôt sur bande, ou d'extrusion de matériau pâteux coloré.

Selon un mode de réalisation le matériau est une pâte de poisson comportant plus de 30% de chair de poisson lavée et raffinée, apte à la gélification, notamment additionnée d'agents stabilisants du type cryoprotecteurs en vue de sa conservation par congélation, et d'une humidité inférieure à 80% ;

Selon un autre mode de réalisation le matériau est un mélange d'une pâte de poisson et d'un matériau fibreux, le matériau fibreux comprenant des fibres obtenues par extrusion d'un diamètre de l'ordre de 1 µm à 1 mm, ou des fibres fines d'un diamètre de l'ordre de 0,1 mm à 1 mm obtenues par réduction dimensionnelle d'une préparation à base de poisson, ou issues de fibres naturelles de produits de la mer issues d'un traitement mécanique de séparation des fibres, le taux d'incorporation du matériaux fibreux dans le matériau pâteux étant compris entre 5 et 60% en poids, en fonction du résultat de texture désirée, et typiquement entre 5 et 30%.

Typiquement le matériau fibreux extrudé comprend de 15 à 50% de matière sèche, notamment 25 à 40%, cette matière sèche comprenant au moins 35% de protéines totales, issue de poisson et/ou autres produits marins comprenant essentiellement des protéines marines sous forme de hachis, de filets, de pulpes, d'extraits de surimi, et le cas échéant des extraits marins du type huile de poisson, de la poudre d'arêtes de poisson, de la poudre de carapaces de crustacés, du chitosane, du collagène de poisson.

La préparation à base de poisson pour la fabrication des fibres fines comporte plus de 50% de chair de poisson lavée et raffinée, apte à la gélification, notamment additionnée d'agents stabilisants du type cryoprotecteurs en vue de sa conservation par congélation, et d'une humidité inférieure à 80%.

Selon un deuxième aspect l'invention concerne une installation de fabrication mettant en oeuvre le procédé décrit précédemment, comprenant des moyens de fabrication du matériau à cuire, une enceinte de cuisson, des moyens de cuisson microondes, des moyens de cuisson vapeur, des moyens de convoyage.

Les moyens de cuisson microondes comprennent :
- au moins un module de cuisson microondes rapide pour l'étape de cuisson microondes rapide ;
- au moins un module de cuisson vapeur pour l'étape de cuisson vapeur modérée après l'étape de cuisson microondes rapide ;
- un ensemble de générateurs de microondes fournissant une puissance totale de 3 à 12 KW, au moins un module de cuisson microondes rapide étant équipé d'au moins un générateur d'une puissance de 2 à 4 KW par module ;
- un dispositif générateur de vapeur destinée à être acheminée dans le ou les modules de cuisson vapeur lente ;
- un dispositif de réglage et de régulation de l'intensité de la cuisson dans chaque module.

Selon une réalisation, les moyens de cuisson microondes comprennent au moins un module de cuisson microondes modérée confondu(s) ou distinct(s) du(des) modules de cuisson vapeur, l'ensemble de générateurs microondes délivrant une puissance microondes modérée, de 1 à 3 KW répartie dans le ou les modules de cuisson microondes modérée

Le générateur microondes diffuse les microondes par au moins une face du matériau cuit, le générateur étant intégré dans la paroi du four ou dans un compartiment distinct du four et relié par des moyens de conduite des ondes au four .

Selon un troisième aspect l'invention concerne un produit obtenu par la mise en oeuvre du procédé décrit précédemment, ayant, en sortie du four de cuisson, une texture de gel stable, une épaisseur et une largeur d'au moins un cm, sous forme de pièces moulées ou d'une bande.

D'autres objets et avantages de l'invention apparaîtront au cours de la description qui va suivre en référence aux dessins dans lesquels :
- la figure 1 présente schématiquement une installation de cuisson mettant en oeuvre le procédé selon un premier mode de réalisation de l'invention ;

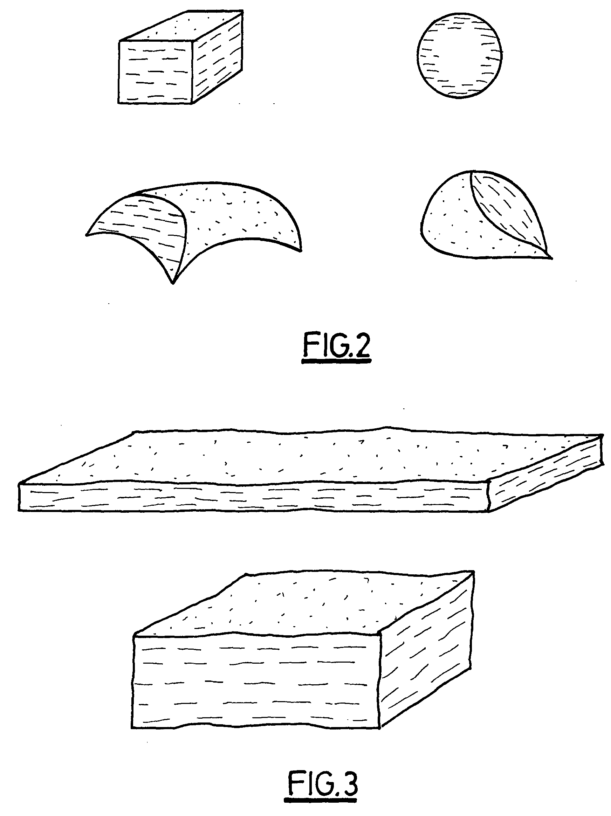

- la figure 2 présente un produit de type forme moulée obtenu en sortie du four de cuisson ;
- la figure 3 présente un produit de type bande de matériau obtenu après cuisson.

On va décrire tout d'abord le procédé de cuisson microondes combinée à la cuisson vapeur dans un four en continu.

Le rôle de la cuisson microondes est d'apporter en très peu de temps une énergie rapide à coeur d'une pièce, isolée ou en bande, volumineuse, de manière à obtenir la gélification des protéines et une cuisson des autres ingrédients.

Le rôle de la cuisson vapeur est de compléter la cuisson afin d'atteindre les températures nécessaires à une cuisson optimale à coeur et en surface.

Par le procédé décrit on introduit une énergie différente du microonde, complémentaire, qui permet de finaliser la cuisson de la zone seuil, de 65 à 75°C, jusqu'à la température à coeur souhaitée, de 75 à 90°C.

Le procédé utilise une installation 1 comprenant des moyens de fabrication du matériau à cuire comprenant un four 2. Le four 2 comporte une zone d'entrée 3, une zone de cuisson 4, une zone de sortie 5. La zone de cuisson comporte une enceinte 6 formant tunnel de cuisson.

Le four 2 est traversé par des moyens de convoyage du type bande transporteuse 7 supportant le matériau à cuire 9 transféré selon la direction de défilement D de l'entrée vers la sortie, pour obtenir après cuisson les produits 9.

Le matériau à cuire 9 est introduit par une zone d'alimentation 10 de type trémie dans laquelle le matériau est sous forme d'une pâte crue, à une température de 0 à 10°C. Dans la réalisation décrite il s'agit d'une pâte de poisson.

Le matériau issue de la trémie 10 est conduit à un appareil de moulage apte à transformer la pâte crue en pièces moulées d'une dimension de 2 à 3 cm de largeur et d'épaisseur.

Ces pièces crues moulées sont ensuite colorées par un asperseur 11 avant d'arriver à l'entrée du four de façon continue, sur la bande 7 typiquement sur plusieurs lignes parallèles selon D.

Après traversée du tunnel de cuisson 6 ouvert à son extrémité d'entrée 12 et son extrémité de sortie 13, les pièces sont cuites, ayant conservé leurs forme d'avant cuisson, mais sous forme d'un gel stable avant refroidissement pour d'autres étapes ultérieures du procédé, par exemple de conditionnement ou de tranchage.

Le four 2 comprend :
- un générateur microondes 14 ;
- un générateur de vapeur 15.

Dans un premier mode de réalisation, la cuisson microondes se produit sur toute la longueur du tunnel 6. Le tunnel 6 comprend successivement de l'entrée vers le sortie un premier module 16, un deuxième module 17, un troisième module 18, de longueurs respectivement L1, L2, L3.

La vitesse de défilement selon D est par exemple de 3 m/min, pour un temps de séjour du produit sous microondes/vapeur de 30 à 120 sec, une température vapeur dans le tunnel de 75 à 130 °C, une pression du générateur de vapeur de 5 à 5,5 bars, une puissance totale émise en microondes de 3 à 12 KW répartie sur l'ensemble du four.

Chaque module 16,17, 18 comprend deux générateurs 19 de puissance microondes logés dans la paroi 20 du four.

Le premier module 16, d'une longueur L1 de 1 mètre, correspond à une cuisson microondes pour une puissance de 2 à 4 KW, pour une cuisson rapide du produit dont la température à coeur en sortie de ce module de l'ordre de 65 à 75°C.

Le deuxième module 17, d'une longueur L2 de l'ordre de 1 m, correspond à une cuisson moins rapide que dans le premier module, avec simultanément dans ce module une cuisson microondes modérée et une cuisson vapeur.

La puissance microondes est de 1 à 3 KW, plus faible que dans le premier module 16.

Le troisième module 18, d'une longueur L3 de l'ordre de 1 m, correspond à une cuisson simultanément microondes modérée et vapeur, comme dans le deuxième module 17.

La puissance microondes est de 1 à 3 KW, plus faible que dans le deuxième module 17.

La cuisson vapeur assurée dans le deuxième module 17 et le troisième module 17 permettent d'obtenir une cuisson jusqu'à la température souhaitée de l'ordre de 75 à 90°C environ à coeur du matériau convoyé.

La cuisson microondes à puissance réduite dans les modules 17,18 achèvent la cuisson de surface.

On évite ainsi le phénomène de croûtage et de perte en eau survenant lors d'une cuisson sèche.

Les générateurs 19 de chaque module sont reliés au générateur principal 14 par un conduit principal 21 ramifié.

Pour la cuisson vapeur, on crée un courant de vapeur à contre courant du sens de défilement des produits. La vapeur produite par le générateur de vapeur 15 est acheminée par une conduite de vapeur 22, jusqu'à un orifice d'introduction 23 logée dans la paroi 20 du troisième module 18, au niveau de sa partie extrême 23a. La vapeur se distribue dans le tunnel tout autour des produits pour une cuisson homogène, et est évacuée par un orifice de sortie 24 de la paroi du deuxième module 17 dans une conduite d'évacuation 25 en entrée du deuxième module 18. La vapeur balaye ainsi le deuxième module 17 et le troisième module 18.

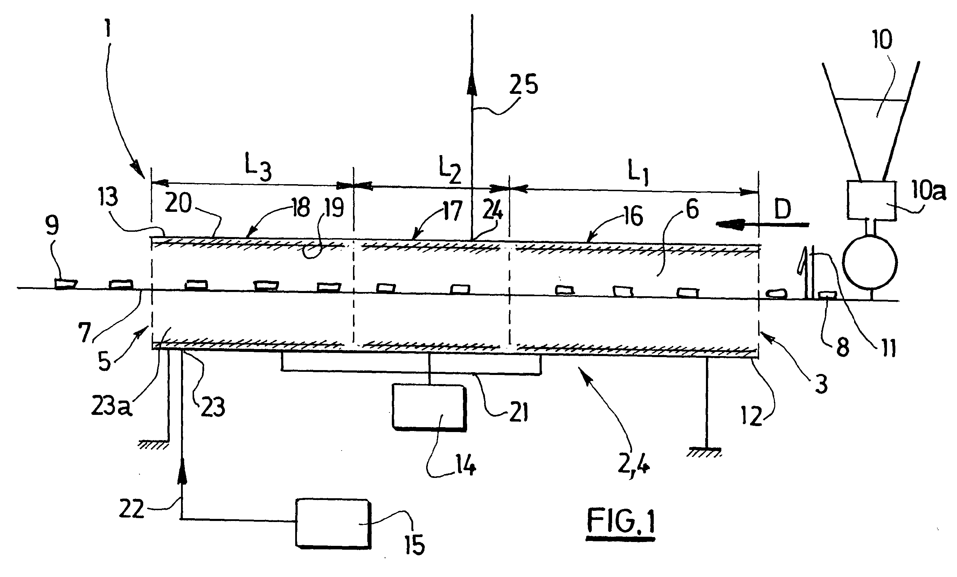

Le four est ainsi beaucoup plus compact, avec une longueur de l'ordre de 5 mètres dans la réalisation de la figure 1, que les fours utilisant uniquement une cuisson vapeur (15 à 20 mètres de longueur). Ce four en continu peut ainsi s'intégrer facilement dans les lignes de production classiques. Une telle ligne peut comporter plusieurs fours en parallèle pour différents formats et formes de produits, par exemple un four pour des pièce moulées, un four pour une bande destinée au tranchage après cuisson et refroidissement.

Pour une bonne tenue de la coloration, celle-ci s'opère préférentiellement avant l'introduction dans la cuisson par l'asperseur 11.

Par cette description d'un premier mode de réalisation on comprend que les unités de puissance microondes sont ajustées en fonction du temps de séjour des produits dans le four et de la densité du produit au mètre.

D'autres modes de réalisation sont ainsi réalisables en faisant varier la longueur et le nombre de modules. On constate que les résultats de cuisson sont satisfaisants lorsque le four comprend au moins deux modules, le premier module correspondant à une forte puissance, typiquement de 3 à 4 KW, de façon à élever rapidement la température et à figer la forme du produit.

Selon un deuxième mode de réalisation, la vapeur n'est pas envoyée à contre courant mais dans le sens de défilement, étant introduite par le deuxième module 17 et évacuée par le troisième module 18. Dans une variante, la vapeur est envoyée directement dans le troisième module et dans le deuxième module par deux conduites différentes.

Selon un troisième mode de réalisation, dans le premier module, on commence la cuisson vapeur dès le premier module, simultanément à la cuisson microondes à forte puissance.

Dans un quatrième mode de réalisation, toute la cuisson microondes est assurée dans le premier module, pour porter la température du produit à coeur à 65-75°C. Le procédé ne comprend pas de cuisson microondes lente. Le four comprend un deuxième module, pas nécessairement un troisième module, dans lequel la cuisson vapeur seule intervient pour achever la cuisson d'ensemble du produit, la température à coeur étant de 75-90°C.

D'après les réalisations décrites, on comprend que différents fours ; notamment quant au type de générateur de microondes, de générateur de vapeur, de matériau de l'enceinte, peuvent être utilisés pour obtenir la cuisson souhaitée. De manière générale, selon l'appareil utilisé, on peut utiliser un générateur central ramifié entre les modules ou un ou plusieurs générateurs autonomes par module. De plus on peut faire varier le nombre selon l'utilisation, par exemple quatre à six modules. En outre, on a décrit un appareil avec une puissance totale de l'ordre de 3 à 12 KW, les puissances peuvent être augmentées et adaptées, par exemple entre 25 et 60 KW pour des capacités industrielles de l'ordre de 500 Kg/heure.

On décrit maintenant plus précisément le matériau à cuire utilisé.

Selon un premier mode de réalisation de ce matériau, ce matériau est une pâte alimentaire cru de poisson comprenant : entre 30 et 60 % de chair de poisson, entre 25 et 40 % d'eau, entre 5 et 15 % d'épaississants comme par exemple l'amidon ou la fécule. A ces principaux ingrédients, peuvent également se rajouter des gélifiants comme les carraghénannes, le xanthane, la gélatine ou des farines de guar...

Selon un deuxième mode de réalisation de ce matériau, ce matériau est un mélange d'une pâte alimentaire telle que la pâte de poisson ci-dessus, mélangée à un matériau fibreux, le cas échéant avec une étape de texturation avec incorporation d'air dans le matériau pâteux, texturation ayant lieu avant le mélange. Cette texturation peut se faire par incorporation, d'une part d'air pour une part de pâte de poisson, ou de 0,5 part d'air pour une part de pâte de poisson. La part d'air peut varier de 0,5 à 1, ce qui permet d'obtenir des textures différentes (plus ou moins aérées). Le mélange intime de l'air et de la pâte de poisson permet d'obtenir une nouvelle texture de pâte souple, légère, élastique, fondante.

Selon une première variante de ce deuxième mode de réalisation, le matériau fibreux est obtenu par extrusion d'une pâte de poisson. Le matériau fibreux comprend des fibres obtenues par extrusion, d'un diamètre de l'ordre 0,1 à 1 mm ramifiées en fibres d'un diamètre de l'ordre de 1µm à 1 mm.

La formulation du mélange est constituée principalement de protéines de poissons et/ou autres produits de la mer : poissons, chairs de poissons, surimi, calamars, encornets, poulpes, crabes, crevettes, moules, etc. Par protéines de poissons, on entend des protéines de poissons et/ou des protéines d'autres produits de la mer.

Selon une deuxième variante de ce deuxième mode de réalisation, le matériau fibreux est constitué de fibres fines obtenues par réduction dimensionnelle d'une mêlée de poisson.

Par exemple les fibres fines sont obtenues à partir d'une pâte de poisson comprenant : 80 % de chair de poisson, 7 % d'amidon, 7 % d'eau, 3 % de sel, 3 % d'arôme. Cette pâte est mise en forme entre 1 et 4 °C dans un emballage étanche qui détermine sa forme, tel qu'un boyau de 50 à 80 cm de long sur 10 à 15 cm de diamètre, un sac rétractable, une barquette ou un moule plastique. Cette pâte est cuite dans son emballage étanche entre 80 et 95°C pendant 1 heure à 1,5 heure, puis stocké à -20°C en attente d'utilisation. Le produit subit ensuite un tempérage entre 0 et -10°C avant de subir une réduction dimensionnelle permettant d'obtenir des fibres de diamètre inférieur à 1 mm et de 0,5 à 5 cm de long.

Selon une autre réalisation, les fibres fines sont obtenues par réduction dimensionnelle d'une pâte de poisson extrudée comprenant par exemple : 60 % de chair de poisson, 19 % d'eau, 10 % de matières grasses végétales, 1.5 % de sel, 1 % d'arôme, 7 % d'amidon et 1.5% de gélifiant.

Selon une troisième variante de ce deuxième mode de réalisation, le matériau fibreux est constitué de fibres naturelles cuites ou crues, telles que des miettes naturelles de chair de poisson, de crabe, ou d'autres produits de la mer, obtenues par séparation mécanique de myotomes. Les fibres sont plus ou moins dissociées, de taille plus ou moins longue. La matière première utilisée pour obtenir ces fibres est typiquement choisie dans les catégories suivantes :
- filets de poisson ou morceaux ou chutes de filetage / parage ;
- poissons gras ou maigres ;
- poissons blanc ou rose ou à peau bleue (Hoki, Lieu noir, Colin, Merlan, Merlu ..., Saumon, Truite, Thon, Maquereau...) ;
- poissons frais ou congelés - natures ou fumés.

On a décrit des exemples précis de matériau de type produits de la mer. D'autres applications faisant intervenir la cuisson combinée en continu micrrondes-vapeur sont possibles, notamment la cuisson d'une pâte alimentaire dont la structure doit être stabilisée par chauffage rapide mais sans dessèchement. C'est le cas par exemple pour certaines préparations fromagères ou charcutières, par exemple : pièces moulées à partir d'une pâte de jambon, petits pâtés, nuggets de volailles ou de poisson, steack de fromage, mini saucisses.

## Revendications

1. Procédé de fabrication en continu d'un produit alimentaire sous forme de pâte crue mettant en oeuvre un four micro-ondes comprenant plusieurs modules consécutifs de cuisson, et comprenant en combinaison une étape de cuisson micro-ondes et une étape de cuisson vapeur, la cuisson micro-ondes permettant essentiellement la cuisson rapide à coeur du produit de manière à obtenir une structure de type gel suffisamment stable, et la cuisson vapeur complétant la cuisson micro-ondes sans dessèchement ni éclatement du matériau cuit du produit, la cuisson micro-ondes étant réalisée avant ou simultanément avec la cuisson vapeur, **caractérisé en ce qu'**il comprend :
- une étape de cuisson micro-ondes rapide dans au moins un module de cuisson micro-ondes, à la puissance de 2 à 4 KW par module, de manière à obtenir une montée en température du matériau jusqu'à 65 à 75°C en sortie du ou des modules de cuisson micro-ondes rapide, la cuisson rapide évitant la déformation des formes ;
- une étape de cuisson vapeur modérée de manière à permettre la montée en température à coeur du produit jusqu'à une température de 75 à 90°C.

2. Procédé selon la revendication 1, mettant en oeuvre une installation de type four à micro-ondes comprenant une entrée et une sortie, **caractérisé en ce qu'**il comprend les étapes suivantes :
- introduction du matériau à cuire par l'entrée du four
- transfert du matériau de l'entrée vers la sortie du four, la cuisson micro-ondes étant telle que les ondes sont réparties de façon homogène dans l'enceinte de cuisson ;
- évacuation du matériau cuit du four et refroidissement du matériau cuit.

3. Procédé selon la revendication 2, **caractérisé en ce qu'**il comprend une étape de cuisson micro-ondes modérée, à puissance suffisamment réduite, typiquement de 1 à 3 KW par module, pour achever la cuisson de surface sans altération des formes.

4. Procédé selon la revendication 2 ou 3, **caractérisé en ce que** l'on crée un courant de vapeur circulant dans les modules dans le même sens ou dans le sens opposé au sens de défilement des produits dans le four.

5. Procédé selon l'une quelconque des revendications précédentes, **caractérisé en ce que** le temps de séjour du matériau cuit dans le four exposé à la cuisson combinée micro-ondes-vapeur est de 30 à 120 secondes, la température de la vapeur dans le tunnel de cuisson étant de 75 à 130°C, la puissance totale émise en micro-ondes étant de 3 à 12 KW répartie sur l'ensemble du four pour un débit de 50 à 140 Kg/heure.

6. Procédé selon l'une quelconque des revendications précédentes, **caractérisé en ce qu'**il comprend une étape de moulage, le matériau se présentant sous forme de formes moulées typiquement de 1 à 3 cm de largeur et de 1 à 5 cm d'épaisseur, et un poids de 3 à 300 g, typiquement 5 à 20 g.

7. Procédé selon l'une quelconque des revendications 1 à 5, **caractérisé en ce que** le matériau à cuire se présente sous la forme d'une bande d'au moins 2 cm de largeur et 1 cm d'épaisseur, typiquement 30 cm à 1m de largeur et 1 à 5 cm d'épaisseur.

8. Procédé selon la revendication 6 ou 7, **caractérisé en ce qu'**il comprend une étape de coloration avant cuisson selon un procédé de pulvérisation, de dépôt sur bande, ou d'extrusion de matériau pâteux coloré.

9. Procédé selon l'une quelconque des revendications 6 à 8, **caractérisé en ce que** le matériau est une pâte de poisson comportant plus de 30% de chair de poisson lavée et raffinée, apte à la gélification, notamment additionnée d'agents stabilisants du type cryoprotecteurs en vue de sa conservation par congélation, et d'une humidité inférieure à 80%.

10. Procédé selon l'une quelconque des revendications 6 à 8, **caractérisé en ce que** le matériau est un mélange d'une pâte de poisson et d'un matériau fibreux, le matériau fibreux comprenant des fibres obtenues par extrusion d'un diamètre de l'ordre de 1 µm à 1 mm, ou des fibres fines d'un diamètre de l'ordre de 0,1 mm à 1 mm obtenues par réduction dimensionnelle d'une préparation à base de poisson, ou issues de fibres naturelles de produits de la mer issues d'un traitement mécanique de séparation des fibres, le taux d'incorporation du matériau fibreux dans le matériau pâteux étant compris entre 5 et 60% en poids, en fonction du résultat de texture désirée, et typiquement entre 5 et 30%.

11. Procédé selon la revendication 10, **caractérisé en ce que** le matériau fibreux extrudé comprend de 15 à 50% de matière sèche, notamment 25 à 40%, cette matière sèche comprenant au moins 35% de protéines totales, issue de poisson et/ou autres produits marins comprenant essentiellement des protéines marines sous forme de hachis, de filets, de pulpes, d'extraits de surimi, et le cas échéant des extraits marins du type huile de poisson, de la poudre d'arêtes de poisson, de la poudre de carapaces de crustacés, du chitosane, du collagène de poisson.

12. Procédé selon la revendication 10, **caractérisé en ce que** la préparation à base de poisson pour la fabrication des fibres fines comporte plus de 50% de chair de poisson lavée et raffinée, apte à la gélification, notamment additionnée d'agents stabilisants du type cryoprotecteurs en vue de sa conservation par congélation, et d'une humidité inférieure à 80%.

13. Installation de fabrication mettant en oeuvre le procédé selon l'une quelconque des revendications 1 à 12, **caractérisée en ce qu'**elle comprend des moyens de fabrication du matériau à cuire, des moyens de cuisson micro-ondes, des moyens de cuisson vapeur, des moyens de convoyage.

14. Installation de fabrication selon la revendication 13, pour la mise en oeuvre du procédé conforme à l'une quelconque des revendications 1 à 12, **caractérisée en ce que** les moyens de cuisson micro-ondes comprennent :
- au moins un module de cuisson micro-ondes rapide pour l'étape de cuisson micro-ondes rapide ;
- au moins un module de cuisson vapeur pour l'étape de cuisson vapeur modérée après l'étape de cuisson micro-ondes rapide ;
- un ensemble de générateurs de micro-ondes fournissant une puissance totale de 3 à 12 KW, au moins un module de cuisson micro-ondes rapide étant équipé d'au moins un générateur d'une puissance de 2 à 4 KW par module ;
- un dispositif générateur de vapeur destinée à être acheminée dans le ou les modules de cuisson vapeur lente ;
- un dispositif de réglage et de régulation de l'intensité de la cuisson dans chaque module.

15. Installation selon la revendication 14, **caractérisée en ce que** les moyens de cuisson micro-ondes comprennent au moins un module de cuisson micro-ondes modérée confondu(s) ou distinct(s) du(des) modules de cuisson vapeur, l'ensemble de générateurs micro-ondes délivrant une puissance micro-ondes modérée, de 1 à 3 KW répartie dans le ou les modules de cuisson micro-ondes modérée.

16. Installation selon la revendication 14 ou 15, **caractérisée en ce que** le générateur micro-ondes diffuse les micro-ondes par au moins une face du matériau cuit, le générateur étant intégré dans la paroi du four ou dans un compartiment distinct du four et relié par des moyens de conduite des ondes au four.

17. Procédé selon l'une des revendications 1 ou 2 **caractérisé en ce que** la puissance micro-ondes totale est comprise entre 25 et 60 KW pour un débit de l'ordre de 300 à 500 Kg/heure.

18. Produit obtenu par la mise en oeuvre du procédé selon l'une quelconque des revendications 1 à 12, **caractérisé en ce qu'**il a, en sortie du four de cuisson, une texture de gel stable, d'une épaisseur et d'une largeur d'au moins un cm, sous forme de pièces moulées ou d'une bande.
